# EUROPEAN PATENT SPECIFICATION

(11) **EP 1 950 094 B1**
(45) Date of publication and mention of the grant of the patent: **05.09.2012**
(21) Application number: 07013774.0
(22) Date of filing: 13.07.2007
(51) Int. Cl.: G01C 21/26, B60R 11/02

(54) **A system for mounting a mobile electronic device**
System zum Zusammenbau einer mobilen elektronischen Vorrichtung
Système de montage d'un dispositif électronique mobile

(30) Priority: 26.01.2007 EP 07001749
(43) Date of publication of application: 30.07.2008
(73) Proprietor: Harman Becker Automotive Systems GmbH, 76307 Karlsbad (DE)
(72) Inventor: Wlotzka, Paul, 72622 Nürtingen (DE); Johannsen, Ulrike, 70565 Stuttgart (DE); Gressly, Dominique, 70175 Stuttgart (DE)
(74) Representative: Bertsch, Florian Oliver

(56) References cited:
- EP-A1- 1 686 010
- EP-A2- 0 899 889
- WO-A1-02/37446
- WO-A1-03/080396
- WO-A1-2005/083362
- DE-A1- 19 743 371
- DE-C1- 19 825 790
- DE-U1-202006 003 665
- JP-A- 9 162 959
- US-A1- 2002 152 027

## Description

The invention relates to a system for mounting a mobile electronic device, wherein the mobile electronic device is mounted to a fixed electronic device by magnetic force. When the mobile device is mounted to the fixed device, a functional connection is established. That way the mobile device can use the features of the fixed device and a data exchange between the fixed and the mobile device becomes possible.

### Related Art

WO 02/37446 Al discloses an on-board navigation system integrated into a vehicle infrastructure and a mobile personal navigator that can be coupled to the on-board system.

Today, mobile electronic devices are widespread and can be used for a variety of applications, such as communication, navigation, organization or entertainment. Even though these mobile electronic devices are very self-sufficient, they need to be at least periodically connected to fixed devices, in order to perform functions such as charging the battery of the mobile device or transferring new data to the mobile device or from the mobile device. Furthermore, using these mobile electronic devices in combination with a fixed device may be advantageous, for example a portable music player used in combination with a fixed stereo system will be able to produce a better sound output with a higher volume than the portable music player by itself, or a mobile handheld navigation system is better mounted to a component inside a vehicle when driving, so that the mobile navigation system can be charged and can be connected to an antenna of the vehicle, and so that the driver does not need to hold the device in his hand while driving. Similarly, a mobile phone may be connected to a car stereo when driving, so that hands-free communication via the mobile phone is enabled. By splitting the functionality between the fixed and the mobile device, a full functionality can be obtained without the need to provide components twice. For example, a fixed stereo system may provide the amplification, while a portable audio player may provide the digital-to-analog conversion. In such an arrangement, data has to be transferred between the mobile electronic device and the fixed device. As a result, there is the need to connect a mobile electronic device to a fixed electronic device in a simple and reliable way, and to simultaneously establish a functional connection between the two devices.

DE 100 63 574 C1 discloses a device for mounting a mobile component. The device comprises a base plate with a magnet on its upper surface and an elastic covering. The base plate is mounted by self-adhesive foil to the dashboard of a vehicle. The mobile device is then mounted to the base plate by magnetic force. Although the device for mounting a mobile component disclosed in the above-referenced patent provides a simple way of mounting a mobile component, it is not suitable for mounting a mobile electronic device to a fixed electronic device and for establishing a connection between the mobile device and the fixed electronic device.

WO 03/080 396 A1 discloses mounting a detachable module to a fixed module using magnets in one or both modules.

### Summary of the Invention

Thus, a need exists to provide a system for securely mounting a mobile electronic device to a fixed electronic device, whereby a functional connection is established between the two devices, wherein the mobile component should be easy to mount and dismount, and wherein the system should be cost effective and not susceptible to wear and mechanical failure.

This need is accomplished by a system for mounting a mobile electronic device as described in independent claim 1.

Preferred embodiments of the invention are described in the dependent claims.

According to the invention, a system is provided for mounting a mobile electronic device to a fixed electronic device by a magnetic force, wherein a functional connection is established between the mobile electronic device and the fixed electronic device when the mobile electronic device is mounted to the fixed electronic device. Both the mobile and the fixed electronic device may be able to function on their own, or the mobile device is able to function on its own while the fixed electronic device serves as a base station. Fixing the mobile device to the fixed device by a magnetic force has the advantage that no moving parts and no mechanical components are required, whereby the configuration remains simple and cost effective. The system is furthermore very robust, since it does not comprise mechanical components which could be easily damaged by a user. By using a magnetic force, mounting and dismounting of the mobile device becomes very simple, a mal-operation by the user is almost impossible. Since only a very small number of fixed components is required, production costs are low compared to mechanical mounts comprising a multitude of moving mechanical components. The surface on the fixed electronic device, to which the mobile electronic device is mounted can furthermore be freely designed since no arrest elements like studs or grooves are required. Establishing a functional connection between the mobile and the fixed device when the mobile device is mounted to the fixed device has the advantage that the mobile device can use components of the fixed device, such as an antenna or loudspeakers of a fixed stereo system, or its batteries can be charged through the fixed device, or data can be transferred between the mobile and the fixed device. Thus, by a system according to the present invention, the mobile electronic device is fixed at a predetermined position on the fixed electronic device whereby all the connections needed are provided.

In the present invention, the mobile device and the fixed device are each provided with one or a plurality of permanent magnets. The north pole or the south pole of the magnet(s) inside the mobile device may be facing the mounting surface of the mobile device when the south pole or the north pole of the magnet(s) inside the fixed device is facing the mounting surface of the fixed device, respectively. Mounting surfaces in this context are the faces of the mobile and the fixed electronic device that are very close or in contact with each other when the mobile electronic device is mounted to the fixed electronic device. That way, it is predetermined which poles face the mounting face of the mobile and the fixed device. This has the advantage that a mobile device may be mounted to several fixed devices, in which the magnets have all the same orientation. Thus, to allocate a certain magnet orientation to either one of the devices ensures compatibility of the mounting system between various mobile and fixed devices. Using magnets in both the mobile and the fixed device results in a higher mounting force. The magnets are be arranged in both the mobile and the fixed device in such a way that north/south poles of magnets in the mobile device face respective south/north poles of the magnets in the fixed device. The magnets are arranged and oriented in such a way that the mobile device is firmly secured to the fixed device and the orientation of the mobile device is determined by the arrangement of the magnets. Using such an arrangement means that each magnet in the mobile device is associated with a magnet in the fixed device. Since the orientation of the magnets and their position can be chosen, it is possible to arrange the magnets so that the mobile device can be mounted to the fixed device in only one predetermined position. That has the advantage that a mobile device can be mounted in a predetermined position even on a flat face, where no arresting means are provided. This can be of importance for establishing a functional connection, such as a connection through electrical contacts. The magnets may also be arranged and oriented in such a way that the interfering effects of the magnetic field become negligible. Today, magnets are available that exhibit a very strong magnetic force even though the magnet itself is only of a small size. Thus, it will be possible to establish a secure connection even with only a small amount of space being occupied by magnets. Examples of magnets that could be used are ferrite magnets, samarium-cobalt magnets, or neodymium iron boron magnets.

According to a further aspect of the invention, arrest means are provided on the fixed device for arresting the mobile device in a predetermined position when said mobile device is mounted to the fixed device. Arrest means may also be provided on the mobile device for arresting the mobile device in a predetermined position. These arrest means have the advantage that the mobile device is mounted and oriented in a predetermined position whereby for example an electrical connection can be established between contacts on the fixed device and on the mobile device. The arrest means on the fixed device may for example have the shape of a rip or rips, which are arranged in such a way that the outer perimeter of the mobile device rests against these rips, whereby the mobile device is mounted in a predetermined position. The mobile device could also be provided with rips, whereby the fixed device may be provided with grooves, in which the rips engage. The arrest means may also have the form of pins on one device and of a recess on the other. Preferably, the arrest means are formed in the shape of decorative elements, such as a decorative strip or an ornament. That way, the arrest means can be integrated in the overall design of the device.

According to an embodiment of the present invention, electric contacts are provided on the mounting surfaces of both the mobile and the fixed device and an electric connection is established between the contacts on the mobile device and the respective contacts on the fixed device when the mobile device is mounted to the fixed device. That the contacts are provided on the mounting surface can also mean that they are arranged in a recess on said surface or that they may protrude from said surface. Establishing a functional connection by a direct electric connection between the mobile and the fixed device may have several benefits. The battery of the mobile device may be charged through the electric connection by the fixed device, or an antenna may be connected to the mobile device through the electric connection so that the mobile device can make use of said antenna. The battery may be a rechargeable battery, such as a lithium battery, and the antenna may be part of the fixed device, or may be another antenna connected to the fixed device. Furthermore, data may be transferred through the electric contacts.

Furthermore, the functional connections are used to transfer data between the mobile device and the fixed device. Data may include data from sensors connected to the fixed device, or input and output data of an audio system, such as sound data being transferred from a mobile audio device to a fixed audio device or speech data being transferred from a microphone connected to a fixed device to a mobile communication device. Data in regard to navigation may also be transferred between a mobile navigation device and a fixed device mounted inside a vehicle. Furthermore, either the mobile device or the fixed device may be controlled through the functional connection. For example, a volume control element on the mobile device may control the volume of a fixed audio device, or a control element that is part of the fixed device, such as a steering wheel control element of a car stereo may control the function of the mobile device, such as changing a song.

According to a further aspect of the present invention, at least part of the functional connection is established without direct electric contact by using electromagnetic waves, such as radio waves, microwaves or light. Preferably, the functional connection is used to transfer data between the mobile device and the fixed device. The functional connection may be established only through electric contacts, only through a wireless connection, or through both. Using a functional connection without direct electric contact has the advantage that no electric contacts need to be provided on either the mobile device or the fixed device. That way, the position and the orientation in which the mobile device is mounted to the fixed device becomes less important. Depending on the application the frequency range that is used to establish the wireless connection between the mobile device and the fixed device can be chosen. Frequencies in the gigahertz regime, which are for example used for mobile phone communication or wireless networks may be used, but electromagnetic waves in the form infrared light waves may also be used. A further advantage of using electromagnetic waves to connect both devices functionally is that data may be transferred even when the mobile device is not mounted to the fixed device. The functional connection through electromagnetic waves is preferably bidirectional, meaning that both the mobile and the fixed device can emit electromagnetic waves and receive them.

The system can be adapted to a plurality of devices. The fixed device may be a vehicle mounted multimedia system and the mounting point of the mobile device may be located on the face plate of said multimedia system. The mobile device is an electronic device of the group: personal navigation device, mobile phone, handheld organizer, handheld personal computer and portable music player. The advantage of fixing a navigation device to the face plate of a car stereo is that the car stereo is provided with extra functionality, such as navigational functionality. Mounting a mobile phone on the face plate of a car stereo has the advantage that hands-free communication is enabled. That means that microphones located in the car and connected to the car stereo may provide speech data to the mobile phone, while speech data from the mobile phone is output through the speakers of the car stereo through the functional connection. Connecting a portable music player to the car stereo has the advantage that music stored on the portable music player can be played back on the car stereo.

In another embodiment of the present invention, the fixed device and the mobile device are part of a navigation system, whereby the mobile device has navigational functionality even when not mounted to the fixed device. That way, if a vehicle is equipped with a navigation system, part of the navigation system can be detached and can be used as a handheld navigation device. That way, the user can use the navigation system to reach a location by vehicle, whereafter he can detach the mobile component and use it for navigating while walking. The use of the magnetic mount thereby enables simple mounting and dismounting of the mobile device, and furthermore ensures that the mobile device is charged and is connected to the car antenna when navigating while driving.

In a further embodiment, the fixed device and the mobile device are part of a multimedia system, whereby the mobile device has multimedia functionality even when not mounted to the fixed device, and the fixed device has multimedia functionality even when the mobile device is not mounted. The fixed device may be a compact stereo system, whereas the mobile device may be a portable music player. When mounted, music from the portable music player can be played back by the compact stereo system, while both mobile and fixed device are able to play back music by themselves. While mounted, data in the form of music files may be transferred between the compact stereo system and the portable music player. The system has the advantage that music from the portable player can be directly played back on the compact stereo system without the need to plug in any cables and that the portable music player can be simultaneously charged.

According to a further embodiment of the present invention, mounting the mobile device to the fixed device increases the functionality of the fixed device. The advantage hereby is that a fixed device may be purchased and installed, such as a car stereo system, and multiple mobile devices may be purchased at a later time to increase the functionality of the fixed device. For example a mobile phone could be added to the system so that communication is enabled, or a mobile navigation device could be added to the system so that navigation can be performed. The system for mounting the mobile electronic device could thereby be formed in such a way that one mobile device can be mounted to different fixed devices or that multiple mobile devices can be mounted to one fixed device. The arrangement of the magnets inside the mobile or the fixed device may thereby be chosen such that compatibility is ensured.

The term "fixed device" in the above description does not necessarily mean that the device is physically fixed to a non-moveable component. In general, the fixed device will be larger than the mobile device and not intended for mobile use. Examples of fixed devices include a car stereo which is fixed inside the vehicle, a navigation system which is fixed inside a vehicle, or a home stereo system, which may consist of different components such as an amplifier, a CD player and a tuner, or may consist of a compact stereo system, which in principle can be moved, but is too large to be permanently carried around.

### Brief Description of the Drawings

Other features and advantages of the invention will be become apparent to one with skill in the art upon examination of the following figures, in which
Fig. 1 shows a system which is not part of the present invention with an example of a mobile device and a fixed device with magnets mounted in the fixed device and with electric connections provided on both the mobile and the fixed device,
Fig. 2 shows different configurations of the arrangement of magnets in the mobile and the fixed device,
Fig. 3 shows a system which is not part of the present invention with a perspective view of a fixed device having arrest means and a mobile device.

### Detailed Description of Preferred Embodiments

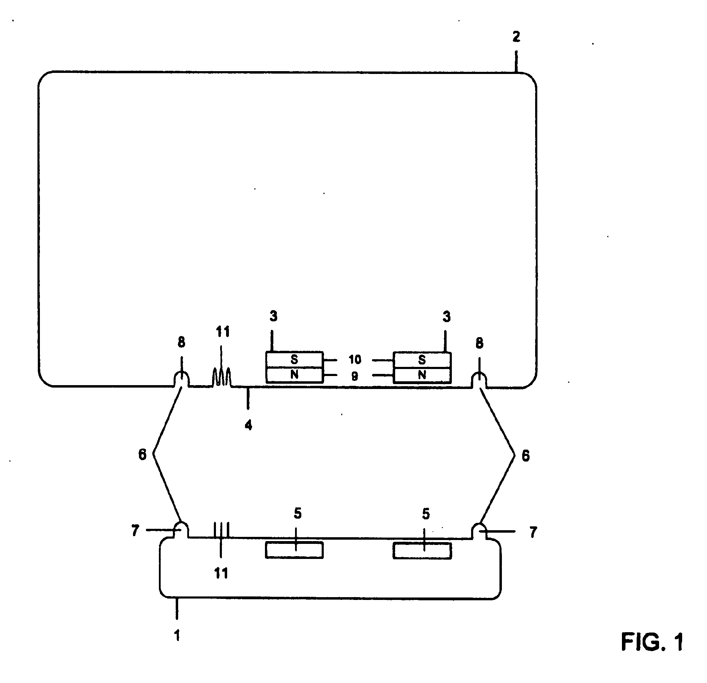

Fig. 1 shows a top view of a cross section of a mobile electronic device 1 and a fixed electronic device 2. Magnets 3 and 3 are arranged behind the face plate 4 of the fixed electronic device 2. At respective positions behind the cover of the mobile electronic device 1, magnetizable metal plates 5 and 5 are arranged. The mobile electronic device 1 comprises arrest means 6 in the shape rips 7 and 7. The rips 7 engage respective arrest means 6 in the shape of grooves 8 on the fixed electronic device 2. The magnets 3 inside the fixed electronic device 2 are oriented so that their north pole 9 faces the face plate 4, while their south pole 10 faces away from the face plate 4. The orientation of the magnets 3 is not of importance, since the respective means for attaching the mobile electronic device 1 are metal plates 5, which will adhere to the magnets 3 irrespective of the magnets' orientation. The magnetic force that the magnets 3 exert on the magnetizable metal plates 5 increases with decreasing distance. When the mobile electronic device 1 is brought up to a certain distance from the fixed electronic device 2, the magnetic force will become so strong that the mobile electronic device 1 is drawn onto the face plate 4 of the fixed electronic device 2 and held there against gravity. At that stage, the position of the mobile electronic device 2 is not determined, instead the mobile electronic device 1 can be shifted to one or the other side. To mount the mobile electronic device 1 to a predetermined position, arrest means 6 are provided on both the mobile and the fixed device. The rips 7 on the mobile electronic device 1 will engage the grooves 8 on the fixed electronic device 2, whereby the position of the mobile electronic device 1 will be fixed to a predetermined position. The arrest means 6 do not have to have the shape of a rip and a groove, they could also be formed in different shapes. Another possibility is to only provide rips or a recess on the fixed electronic device 2, while no arrest means are provided on the mobile electronic device 1, and the rips or the recess are adapted to contact the other perimeter of the mobile electronic device 1 so that the mobile electronic device 1 is fixed in its position. The arrest means 6 may have the shape of design elements so as to fit together with the overall design of the electronic devices. Furthermore, electric connections 11 are provided on both the mobile electronic device 1 and the fixed electronic device 2. The arrest means 6 and the electric connections 11 are arranged in such a way that when the mobile electronic device 1 is mounted to the fixed electronic device 2 and arrested in the predetermined position, the electric contacts 11 and 11 on both devices are in contact with each other. Preferably, at least two electric contacts 11 are provided on each device, through which the battery of the mobile electronic device 1 is charged. Additional electric contacts may also be provided, for, e.g., connecting an antenna, or enabling data transfer between the mobile and the fixed device. In the depicted embodiment, three connections are provided, one for ground, one for charging the device and one for connecting an antenna. Furthermore, additional functional connectivity may be provided by a wireless connection (not shown). Such a connection could be established by gigahertz frequency electromagnetic waves, or by infrared light. The fact that the mobile electronic device 1 is located very close to the fixed electronic device 2 when mounted enables the use of low power emitters. Both devices may be equipped with emitters and receivers, yet it is also possible to equip one device only with a receiver and one device only with an emitter. Similar to the electric connection, both devices may also establish a connection by infrared light, wherein both devices are equipped with means (not shown) to emit infrared light and detect infrared light. The means by which the functional connection is established may be chosen according to the application, it is just important that a functional connection is established and that the mobile device is mounted to the fixed device by a magnetic force.

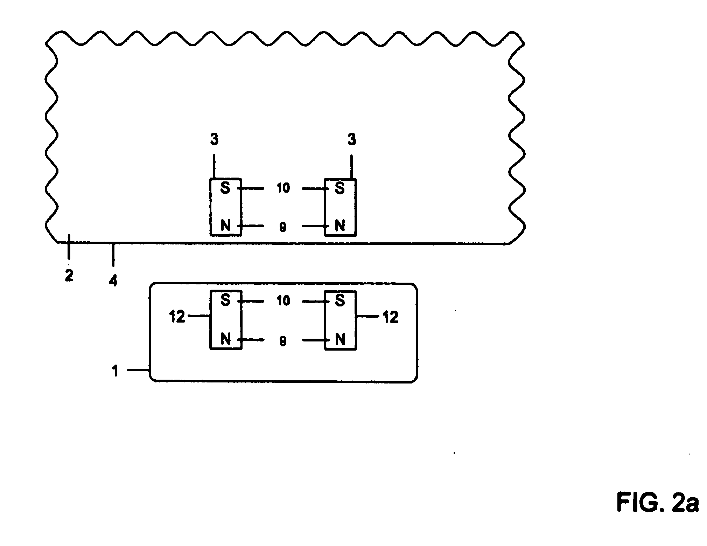

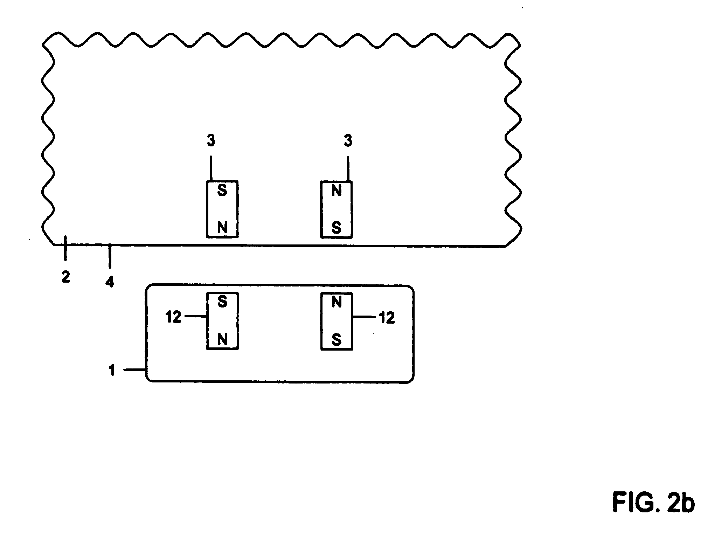

Fig. 2 is a view from above of the cross section of the mobile electronic device 1 and a fixed electronic device 2, wherein the mobile electronic device 1 is provided with magnets 12 and the fixed electronic device 2 is provided with magnets 3. The same reference numerals in Figs. 1-3 denote similar components. In the embodiment (a), the magnets 3 are arranged with their north poles 9 facing the pace plate 4 of the fixed electronic device 2. Magnets 12 are arranged inside the mobile electronic device 1 at respective positions with the south poles 10 of the magnets 12 facing the cover of the mobile electronic device 1. The respective magnets 3 and 12 attract each other, whereby the mobile electronic device 1 is mounted and fixed on the fixed electronic device 2. The strong magnetic force between two magnets will ensure that the mobile electronic device 1 is securely mounted. With such a configuration, the mobile electronic device 1 can also be mounted to another fixed electronic device, which has the same arrangement and orientation of magnets. That way, by predefining a certain orientation and arrangement of the magnets, compatibility between different fixed electronic devices and mobile electronic devices is ensured. Alternatively, the orientation of both the magnets 3 inside the fixed electronic device and the magnets 12 inside the mobile electronic device could be reversed, whereby an identical effect is achieved. In the present embodiment without arrest means, the mobile electronic device 1 can be rotated by 180° around an axis perpendicular to the face plate 4, or it can be shifted to one side so that only one magnet 3 and one magnet 12 face each other and attach to each other.

Embodiment (b) of Fig. 2 shows a different arrangement of magnets 3 and 12. The magnets 3 and 3 inside the fixed electronic device 2 are oriented in opposite directions, similar to the magnets 12 and 12 inside the mobile electronic device 1. The north/south poles of the magnets 3 and 3 facing the face plate 4 face respective south/north poles of the magnets 12 and 12 which are arranged behind the cover of the mobile electronic device 1. When the mobile electronic device 1 is mounted to the fixed device 2, the magnets 3 in the fixed electronic device and the magnets 12 in the mobile electronic device attract each other and the mobile electronic device is fixed by a strong magnet force. The arrangement of the magnets in the present embodiment prevents that the mobile electronic device 1 can be rotated 180° around an axis perpendicular to the face plate 4, since in that case, north/ south poles of the magnets 3 would face north/south poles of the magnets 12, whereby a repulsion between the magnets would occur. This means that the mobile electronic device 1 can be securely mounted to the fixed electronic device 2 in a predetermined position with a predetermined orientation, without the need for arrest means. Different arrangements of magnets are possible, it is just important that the magnets are arranged in such a way that a secure and strong adhesion of the mobile electronic device is provided. For example, the orientation of both the magnets 3 and the magnets 12 could be changed, or more magnets could be arranged in both the mobile electronic device and the fixed electronic device, as long as respective north and south poles face each other. The shape of the magnets is thereby not of importance, they could be for example cylinder-shaped or cube-shaped, and could be formed of different materials.

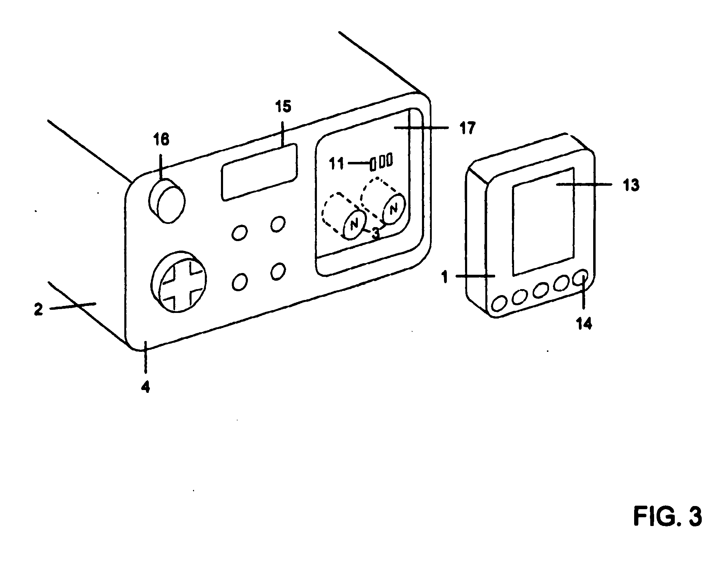

Fig. 3 shows a system which is not part of the present invention. Fig. 3 is a perspective view of a mobile electronic device 1 which is to be mounted to a fixed electronic device 2. The mobile electronic device 1 comprises a display 13 and control elements 14, and represents a handheld navigational device which is functional on its own. Similarly, the fixed electronic device 2 comprises a display 15 and control elements 16 on its face plate 4. In the present embodiment, the fixed electronic device 2 represents a car stereo system which is functional on its own. The fixed electronic device 2 furthermore comprises a recess 17, in which electric connections 11 and magnets 3 are arranged. The recess 17 has a shape which corresponds to the outer perimeters of the mobile electronic device 1 so that the mobile electronic device 1 just fits into the recess 17 when its display 13 is pointing away from the fixed electronic device 2. To securely hold the mobile electronic device 1 in the recess, magnets 3 are provided behind the back wall of the recess, and magnetizable metal plates (not shown) are provided at respective positions behind the cover of the mobile electronic device 1 on the opposite side of the display 13. Electric contacts 11 are provided both on the back wall of the recess 17 and on the back side of the mobile electronic device 1 (not shown). When the mobile electronic device 1 is mounted in the recess 17 of the fixed electronic device 2 by magnetic force, the electric contacts 11 in the recess 17 and the electric contacts (not shown) on the back side of the mobile electronic device 1 are in contact. Thus, a functional connection is established between the mobile electronic device 1 and the fixed electronic device 2, through which the battery of the mobile electronic device 1 is charged. The mobile electronic device 1, which is a handheld navigation device in the present embodiment is also connected to an antenna through the electric connection 11. That way the reception of position signals of the handheld navigation device is improved. Furthermore, a functional connection is established by means of gigahertz electromagnetic radiation between the mobile electronic device 1 and the fixed electronic device 2. That functional connection may be used, for example to transfer speech data output by a navigation system of the mobile electronic device 1 to the fixed electronic device 2, for being emitted by loudspeakers that are connected to the fixed electronic device 2, which is a car stereo system. That way by mounting the mobile electronic device 1 to the fixed electronic device 2 the functionality of the fixed electronic device 2 is increased, and the mobile electronic device 1 can make use of features provided by the fixed electronic device 2. As previously described, other embodiments of the present invention are also possible, such as mounting a mobile phone or a portable music player to fixed devices, such as a car stereo, a car navigation system, or a home entertainment system.

In summary, the present invention provides a system for mounting a mobile electronic component to a fixed electronic component which is easy to produce, reliable and provides a secure mount, while still being easy to use. Furthermore, a functional connection is established between the fixed and the mobile device, which enables the mobile device to use functions of the fixed device, and which increases the functionality of the fixed device. With the system of the present invention, the mobile device is securely stored on the face plate of the fixed electronic device while still maintaining its functionality.

## Claims

1. System for mounting a mobile electronic device (1) to a fixed electronic device (2), wherein a functional connection is established between the mobile electronic device (1) and the fixed electronic device (2) when the mobile electronic device (1) is mounted to the fixed electronic device (2), the functional connection being adapted to transfer data between the mobile electronic device (1) and the fixed electronic device (2), wherein
the fixed electronic device is a vehicle mounted multimedia system or a navigation system fixed inside the vehicle, and wherein
the mobile device (1) is an electronic device of the group: personal navigation device, mobile phone, handheld organizer, handheld personal computer and portable music player,
**characterized in that**
the mobile electronic device (1) is mounted to the fixed electronic device (2) by a magnetic force,
wherein the mobile electronic device (1) and the fixed electronic device (2) are each provided with one or a plurality of permanent magnets (3, 12),
wherein the magnets (3, 12) are arranged in both the mobile (1) and the fixed electronic device (2) in such way that north/south poles of magnets (12) in the mobile electronic device face respective south/north poles of the magnets (3) in the fixed electronic device, and
wherein the magnets (3, 12) are arranged and oriented in such way that the mobile electronic device (1) is firmly secured to the fixed electronic device (2) and that the orientation of the mobile electronic device (1) is determined by the arrangement of the magnets (3, 12).

2. System for mounting a mobile electronic device to a fixed electronic device according to claim 1, **characterized in that** the north pole (9) or the south pole (10) of the magnet(s) (12) inside the mobile device (1) is facing the mounting surface of the mobile device (1) when the south pole (10) or the north pole (9) of the magnet(s) (3) inside the fixed device (2) is facing the mounting surface of the fixed device (2), respectively.

3. System for mounting a mobile electronic device to a fixed electronic device according to any of the preceding claims, **characterized in that** electric contacts (11) are provided on the mounting surfaces of both the mobile and the fixed device and that an electric connection is established between the contacts (11) on the mobile device (1) and the respective contacts (11) on the fixed device (2) when the mobile device (1) is mounted to the fixed device (2).

4. System for mounting a mobile electronic device to a fixed electronic device according to claim 3, **characterized in that** the battery of the mobile device (1) is charged through the electric connection.

5. System for mounting a mobile electronic device to a fixed electronic device according to claim 3 or 4, **characterized in that** the mobile device (1) is connected to an antenna through the electric connection.

6. System for mounting a mobile electronic device to a fixed electronic device according to any of the preceding claims, **characterized in that** at least a part of the functional connection is established without direct electric contact by using electromagnetic waves, such as radio waves, microwaves or light.

7. System for mounting a mobile electronic device to a fixed electronic device according to any of the preceding claims, **characterized in that** the fixed device (2) is a vehicle mounted multimedia system and that the mounting point of the mobile device (1) is located on the face plate (4) of said multimedia system.

8. System for mounting a mobile electronic device to a fixed electronic device according to claims 1-6, **characterized in that** the fixed device (2) and the mobile device (1) are part of a navigation system, whereby the mobile device (1) has navigational functionality even when not mounted to the fixed device (2).

9. System for mounting a mobile electronic device to a fixed electronic device according to claims 1-7, **characterized in that** the fixed device (2) and the mobile device (1) are part of a multimedia system, whereby the mobile device (1) has multimedia functionality even when not mounted to the fixed device (2), and the fixed device (2) has multimedia functionality even when the mobile device (1) is not mounted.

10. System for mounting a mobile electronic device to a fixed electronic device according to any of the preceding claims, **characterized in that** mounting the mobile device (1) to the fixed device (2) increases the functionality of the fixed device (2), the functionality including a navigational functionality.

## Patentansprüche

1. System zum Befestigen einer mobilen elektronischen Vorrichtung (1) an einer fest angebrachten elektronischen Vorrichtung (2), wobei eine funktionale Verbindung zwischen der mobilen elektronischen Vorrichtung (1) und der fest angebrachten elektronischen Vorrichtung (2) aufgebaut wird, wenn die mobile elektronische Vorrichtung (1) an der fest angebrachten elektronischen Vorrichtung (2) befestigt ist, wobei die funktionale Verbindung eingerichtet ist, um Daten zwischen der mobilen elektronischen Vorrichtung (1) und der fest angebrachten elektronischen Vorrichtung (2) zu übertragen, wobei
die fest angebrachte elektronische Vorrichtung (2) ein in einem Fahrzeug befestigtes Multimediasystem oder ein Navigationssystem, das in dem Fahrzeug fest angebracht ist, ist, und wobei
die mobile Vorrichtung (1) eine elektronische Vorrichtung der folgenden Gruppe ist: persönliche Navigationsvorrichtung, Mobiltelefon, tragbarer Terminplaner, tragbarer Personal Computer und tragbares Musikwiedergabegerät,
**dadurch gekennzeichnet, dass**
die mobile elektronische Vorrichtung (1) an der fest angebrachten elektronischen Vorrichtung (2) durch magnetische Kraft befestigt ist,
wobei die mobile elektronische Vorrichtung (1) und die fest angebrachte elektronische Vorrichtung (2) jeweils mit einem oder einer Vielzahl von Permanentmagneten (3, 12) bereitgestellt sind,
wobei die Magneten (3, 12) in sowohl der mobilen (1) als auch der fest angebrachten elektronischen Vorrichtung (2) derart angeordnet sind, dass Nord-/Südpole der Magneten (12) in der mobilen elektronischen Vorrichtung entsprechenden Süd-/Nordpolen der Magneten (3) in der fest angebrachten elektronischen Vorrichtung zugewendet sind, und
wobei die Magneten (3, 12) so angeordnet und orientiert sind, dass die mobile elektronische Vorrichtung (1) stark an der fest angebrachten elektronischen Vorrichtung (2) gesichert ist und dass die Orientierung der mobilen elektronischen Vorrichtung (1) durch die Anordnung der Magneten (3, 12) bestimmt ist.

2. System zum Befestigen einer mobilen elektronischen Vorrichtung an einer fest angebrachten elektronischen Vorrichtung gemäß Anspruch 1, **dadurch gekennzeichnet, dass** der Nordpol (9) oder der Südpol (10) des Magneten oder der Magneten (12) innerhalb der mobilen Vorrichtung (1) der Befestigungsoberfläche der mobilen Vorrichtung (1) zugewendet ist, wenn jeweils der Südpol (10) oder der Nordpol (9) des Magnets oder der Magneten (3) innerhalb der fest angebrachten Vorrichtung (2) der Befestigungsoberfläche der fest angebrachten Vorrichtung (2) zugewendet ist.

3. System zum Befestigen einer mobilen elektronischen Vorrichtung an einer fest angebrachten elektronischen Vorrichtung gemäß einem der voranstehenden Ansprüche, **dadurch gekennzeichnet, dass** elektrische Kontakte (11) auf den Befestigungsoberflächen sowohl der mobilen als auch der fest angebrachten Vorrichtung bereitgestellt sind, und dadurch, dass eine elektrische Verbindung zwischen den Kontakten (11) auf der mobilen Vorrichtung (1) und den entsprechenden Kontakten (11) auf der fest angebrachten Vorrichtung (2) aufgebaut wird, wenn die mobile Vorrichtung (1) an der fest angebrachten Vorrichtung (2) befestigt ist.

4. System zum Befestigen einer mobilen elektronischen Vorrichtung an einer fest angebrachten elektronischen Vorrichtung gemäß Anspruch 3, **dadurch gekennzeichnet, dass** die Batterie der mobilen Vorrichtung (1) durch die elektrische Verbindung geladen wird.

5. System zum Befestigen einer mobilen elektronischen Vorrichtung an einer fest angebrachten elektronischen Vorrichtung gemäß Anspruch 3 oder 4, **dadurch gekennzeichnet, dass** die mobile Vorrichtung (1) mit einer Antenne durch die elektrische Verbindung verbunden ist.

6. System zum Befestigen einer mobilen elektronischen Vorrichtung an einer fest angebrachten elektronischen Vorrichtung gemäß einem der voranstehenden Ansprüche, **dadurch gekennzeichnet, dass** mindestens ein Teil der funktionalen Verbindung ohne direkten elektrischen Kontakt unter Verwendung von elektromagnetischen Wellen, etwa Radiowellen, Mikrowellen oder Licht, aufgebaut wird.

7. System zum Befestigen einer mobilen elektronischen Vorrichtung an einer fest angebrachten elektronischen Vorrichtung gemäß einem der voranstehenden Ansprüche, **dadurch gekennzeichnet, dass** die fest angebrachte Vorrichtung (2) ein in einem Fahrzeug befestigtes Multimediasystem ist, und dadurch, dass sich der Befestigungspunkt der mobilen Vorrichtung (1) auf der Frontseite (4) des Multimediasystems befindet.

8. System zum Befestigen einer mobilen elektronischen Vorrichtung an einer fest angebrachten elektronischen Vorrichtung gemäß Ansprüchen 1-6, **dadurch gekennzeichnet, dass** die fest angebrachte Vorrichtung (2) und die mobile Vorrichtung (1) Teil eines Navigationssystems sind, wobei die mobile Vorrichtung (1) Navigationsfunktionalität hat, auch wenn sie nicht an der fest angebrachten Vorrichtung (2) befestigt ist.

9. System zum Befestigen einer mobilen elektronischen Vorrichtung an einer fest angebrachten elektronischen Vorrichtung gemäß Ansprüchen 1-7, **dadurch gekennzeichnet, dass** die fest angebrachte Vorrichtung (2) und die mobile Vorrichtung (1) Teil eines Multimediasystems sind, wobei die mobile Vorrichtung (1) Multimediafunktionalität hat, auch wenn sie nicht an der fest angebrachten Vorrichtung (2) befestigt ist, und wobei die fest angebrachte Vorrichtung (2) Multimediafunktionalität hat, auch wenn die mobile Vorrichtung (1) nicht befestigt ist.

10. System zum Befestigen einer mobilen elektronischen Vorrichtung an einer fest angebrachten elektronischen Vorrichtung gemäß einem der voranstehenden Ansprüche, **dadurch gekennzeichnet, dass** das Befestigen der mobilen Vorrichtung (1) an der fest angebrachten Vorrichtung (2) die Funktionalität der fest angebrachten Vorrichtung (2) erweitert, wobei die Funktionalität eine Navigationsfunktionalität beinhaltet.

## Revendications

1. Système de montage d'un dispositif électronique mobile (1) sur un dispositif électronique fixe (2), dans lequel une connexion fonctionnelle est établie entre le dispositif électronique mobile (1) et le dispositif électronique fixe (2) lorsque le dispositif électronique mobile (1) est monté sur le dispositif électronique fixe (2), la connexion fonctionnelle étant adaptée à transférer des données entre le dispositif électronique mobile (1) et le dispositif électronique fixe (2), dans lequel
le dispositif électronique fixe est un système multimédia monté à bord d'un véhicule ou un système de navigation fixé à l'intérieur du véhicule, et dans lequel
le dispositif mobile (1) est un dispositif électronique du groupe: dispositif de navigation personnel, téléphone mobile, assistant électronique de poche, ordinateur personnel de poche et lecteur audio portable,
**caractérisé en ce que**
le dispositif électronique mobile (1) est monté sur le dispositif électronique fixe (2) par une force magnétique, dans lequel le dispositif électronique mobile (1) et le dispositif électronique fixe (2) sont chacun pourvus d'un ou d'une pluralité d'aimants permanents (3, 12),
dans lequel les aimants (3, 12) sont disposés dans le mobile (1) et dans le dispositif électronique fixe (2) respectivement de telle manière que des pôles nord/sud d'aimants (12) dans le dispositif électronique mobile soient en vis-à-vis de pôles sud/nord respectif des aimants (3) dans le dispositif électronique fixe, et
dans lequel les aimants (3, 12) sont disposés et orientés de telle manière que le dispositif électronique mobile (1) soit solidement fixé au dispositif électronique fixe (2) et que l'orientation du dispositif électronique mobile (1) soit déterminée par la disposition des aimants (3, 12).

2. Système de montage d'un dispositif électronique mobile sur un dispositif électronique fixe selon la revendication 1, **caractérisé en ce que** le pôle nord (9) ou le pôle sud (10) de l'aimant (des aimants) (12) à l'intérieur du dispositif mobile (1) est en vis-à-vis de la surface de montage du dispositif mobile (1) lorsque le pôle sud (10) ou le pôle nord (9) de l'aimant (des aimants) (3) à l'intérieur du dispositif fixe (2) est en vis-à-vis de la surface de montage du dispositif fixe (2), respectivement.

3. Système de montage d'un dispositif électronique mobile sur un dispositif électronique fixe selon l'une quelconque des revendications précédentes, **caractérisé en ce que** des contacts électriques (11) sont prévus sur les surfaces de montage du dispositif mobile et du dispositif fixe respectivement, et qu'une connexion électrique est établie entre les contacts (11) sur le dispositif mobile (1) et les contacts respectifs (11) sur le dispositif fixe (2) lorsque le dispositif mobile (1) est monté sur le dispositif fixe (2).

4. Système de montage d'un dispositif électronique mobile sur un dispositif électronique fixe selon la revendication 3, **caractérisé en ce que** la batterie du dispositif mobile (1) est chargée par l'intermédiaire de la connexion électrique.

5. Système de montage d'un dispositif électronique mobile sur un dispositif électronique fixe selon la revendication 3 ou 4, **caractérisé en ce que** le dispositif mobile (1) est connecté à une antenne par l'intermédiaire de la connexion électrique.

6. Système de montage d'un dispositif électronique mobile sur un dispositif électronique fixe selon l'une quelconque des revendications précédentes, **caractérisé en ce qu'**au moins une partie de la connexion fonctionnelle est établie sans contact électrique direct en utilisant des ondes électromagnétiques telles que des ondes radioélectriques, des ondes hyperfréquences, ou la lumière.

7. Système de montage d'un dispositif électronique mobile sur un dispositif électronique fixe selon l'une quelconque des revendications précédentes, **caractérisé en ce que** le dispositif fixe (2) est un système multimédia monté à bord d'un véhicule, et que le point de montage du dispositif mobile (1) est localisé sur la face avant (4) dudit système multimédia.

8. Système de montage d'un dispositif électronique mobile sur un dispositif électronique fixe selon les revendications 1-6, **caractérisé en ce que** le dispositif fixe (2) et le dispositif mobile (1) font partie d'un système de navigation, le dispositif mobile (1) ayant une fonctionnalité de navigation même s'il n'est pas monté sur le dispositif fixe (2).

9. Système de montage d'un dispositif électronique mobile sur un dispositif électronique fixe selon les revendications 1-7, **caractérisé en ce que** le dispositif fixe (2) et le dispositif mobile (1) font partie d'un système multimédia, le dispositif mobile (1) ayant une fonctionnalité multimédia même s'il n'est pas monté sur le dispositif fixe (2), et le dispositif fixe (2) ayant une fonctionnalité multimédia même si le dispositif mobile (1) n'est pas monté.

10. Système de montage d'un dispositif électronique mobile sur un dispositif électronique fixe selon l'une quelconque des revendications précédentes, **caractérisé en ce que** le montage du dispositif mobile (1) sur le dispositif fixe (2) augmente la fonctionnalité du dispositif fixe (2), la fonctionnalité incluant une fonctionnalité de navigation.
